(19) Europäisches Patentamt / European Patent Office / Office européen des brevets

(11) **EP 3 312 398 B1**

(12) **EUROPEAN PATENT SPECIFICATION**

(45) Date of publication and mention
of the grant of the patent:
**20.07.2022 Bulletin 2022/29**

(21) Application number: **17192622.3**

(22) Date of filing: **22.09.2017**

(51) International Patent Classification (IPC):
**F01M 11/10** *(2006.01)* **F01D 25/18** *(2006.01)*

(52) Cooperative Patent Classification (CPC):
**F01M 11/10; F01D 25/18;** F01M 2011/1473

(54) **SYSTEM AND METHOD FOR DETECTING LUBRICATED BEARING CONDITION**

SYSTEM UND VERFAHREN ZUR DETEKTION DES ZUSTANDS EINES GESCHMIERTEN LAGERS

SYSTÈME ET PROCÉDÉ DE DÉTECTION DE L'ÉTAT D'UN PALIER LUBRIFIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.10.2016 US 201615284057**

(43) Date of publication of application:
**25.04.2018 Bulletin 2018/17**

(73) Proprietor: **General Electric Company**
**Schenectady, NY 12345 (US)**

(72) Inventors:
• **NANDA, Subrat**
**Houston, TX 77015 (US)**
• **LEAO, Bruno Paes**
**RJ21941-600 Rio de Janeiro (BR)**

(74) Representative: **Novagraaf Group**
**Chemin de l'Echo 3**
**1213 Onex/ Geneva (CH)**

(56) References cited:
WO-A1-2016/089238 CN-B- 102 213 116
CN-B- 102 230 399 JP-A- S63 263 209
JP-B2- 3 348 590 US-A1- 2010 270 798
US-A1- 2012 185 180 US-A1- 2015 356 521

**Description**

BACKGROUND OF THE INVENTION

The subject matter disclosed herein relates to bearings, such as a system and method for detecting the condition of a lubricated bearing of a turbomachinery system.

Turbomachinery may include an apparatus such as a turbine, a compressor, or a pump. One or more components of the turbomachinery rotate about an axis. A bearing of the turbomachinery may facilitate rotation of the one or more components about the axis. Additionally, the bearing may support loads on or generated by the turbomachinery. A load on the bearing that is greater than a design capacity may increase wear on the bearing. Additionally, elements of the bearing may degrade over time, during operation of the turbomachinery, or any combination thereof. Maintenance or replacement of the bearing when the bearing has significant usable life may increase costs and decrease the efficiency of the turbomachinery. Conversely, delayed maintenance or delayed replacement of a worn bearing may increase the possibility of failure of the bearing, or increase the possibility of damage to the turbomachinery.

In JP S63 263209 a computer is provided with a display that is connected with a temperature sensor and arranged to be in contact with an engine oil and an ignition key switch. The computer operates the gradient of an oil deterioration level on the detected value of the temperature sensor, and integrates the gradient on an engine operating time based on an ignition switch to determine the oil deterioration level, and displays an oil residual life on the display.

US 2012/185180 A1 provides a method for automated surveillance of at least one wind turbine. A linear model is created or retrieved, which represents at least one status parameter of the wind turbine and which includes a plurality of linear coefficients and a measurement variable. The values of the linear coefficients are determined based on test measurement values for the measurement variable and the status parameter of the wind turbine. Momentary measurement values are repeatedly captured for the measurement variables and the status parameter of the wind turbine. A momentary reference value of the status parameter is determined based on the momentary measurement values for the measurement variables by using the linear model. Wind turbine status information is generated based on the deviation of the momentary measurement value from the corresponding momentary reference value of the status parameter.

US 2010/270798 A1 discloses a wind turbine and a method for controlling the temperature of a wind turbine generator. The wind turbine comprises a generator, generator temperature control means and means for providing input representative of at least one temperature of the generator to the generator temperature control means. The generator temperature control means includes a closed-loop regulation arranged to determine a deviation of the input from at least one desired value, compute the magnitude of at least one control output in dependency of the determined deviation, and feed the control output to at least one controller of the wind turbine in order to reduce the deviation. The controller comprises control means for controlling the operation of the wind turbine in response to the at least one control output by changing one or more operational parameters of the wind turbine, which parameters influence the at least one temperature of the generator.

BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a monitoring system includes an analytical engine system coupled to a sensor of an engine system. The analytical engine system is configured to receive data corresponding to operation of the engine system, to determine a distance metric corresponding to the operating parameters of the engine system, to compare the distance metric for a monitored lubricant temperature to a model threshold, and to generate a lubricant alert signal when the distance metric for the monitored lubricant temperature is greater than the model threshold. The received data includes the monitored lubricant temperature of a bearing and operating parameters of the engine system. The distance metric is based at least in part on the monitored lubricant temperature relative to a lubricant temperature statistical model, which is based at least in part on the operating parameters of the engine system. The analytical engine system is configured to filter the received data based at least in part on whether the received data corresponds to a steady state operation of the engine system, wherein steady state operation of the engine system is based at least in part on the operating parameters of the engine system.

In a second embodiment, non-transitory computer readable medium includes instructions configured to be executed by a processor of a control system. The instructions include instructions configured to cause the processor to receive a first set of data corresponding to operation of a first turbomachinery system, to determine a distance metric corresponding to the operating parameters of the engine system, to compare the distance metric for a monitored lubricant temperature to a model threshold, and to generate a lubricant alert signal when the distance metric for the monitored lubricant temperature is greater than the model threshold. The first set of received data includes the monitored lubricant temperature of a first bearing and operating parameters of the first turbomachinery system. The distance metric is based at least in part on the monitored lubricant temperature relative to a lubricant temperature statistical model, which is based at least in part on the operating parameters of the first turbomachinery system. The instructions comprise instructions configured to cause the processor to filter the first set of received data to generate filtered data that corresponds to a steady state operation of the first turbomachinery system; to select a subset of the filtered data that corresponds to a normal operation of the first turbomachinery system, wherein the subset is selected based at least in part on a load on the first turbomachinery system, a compressor discharge pressure, or any combination thereof; and to modify the model based at least in part on the subset of the filtered data.

In a third embodiment, a method of operating an analytical engine system includes receiving data corresponding to operation of a gas turbine system, determining a distance metric corresponding to operating parameters of the gas turbine system, comparing the distance metric for a monitored lubricant temperature to a model threshold, and generating a lubricant alert signal when the distance metric for the monitored lubricant temperature is greater than the model threshold. The received data includes the monitored lubricant temperature of a bearing and the operating parameters of the gas turbine system. The distance metric is based at least in part on the monitored lubricant temperature relative to a lubricant temperature statistical model, which is based at least in part on the operating parameters of the gas turbine system. The method further comprises filtering the first set of received data to generate filtered data that corresponds to a steady state operation of the first turbomachinery system; selecting a subset of the filtered data that corresponds to a normal operation of the first turbomachinery system, wherein the subset is selected based at least in part on a load on the first turbomachinery system, a compressor discharge pressure, or any combination thereof; and modifying the model based at least in part on the subset of the filtered data.

BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:

FIG. 1 is an embodiment of a gas turbine turbomachinery system with an analytical engine system;

FIG. 2 is an embodiment of a method for constructing or modifying a model used to monitor the condition a bearing of the turbomachinery system;

FIG. 3 is an embodiment of a method for utilizing the model to monitor the status of a lubricated bearings of the turbomachinery system;

FIG. 4 is an embodiment of a method of managing alerts and operating a remote computer coupled to the turbomachinery system.

DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Lubricated bearings may support rotating components of turbomachinery and engine systems, such as a gas turbine system. Time and use may affect the lubricant and the lubricated elements of the bearing. Through monitoring parameters associated with the lubricated bearing or turbomachinery, it is believed that the condition of the bearing may be determined. Changes in the loading on the bearing may affect the friction within the bearing, and increased friction within the bearing may increase the temperature of the lubricant. Monitoring the temperature of the lubricant in addition to other parameters associated with the lubricated bearing or turbomachinery may enable the construction of a robust model of the bearing condition, as discussed in detail below.

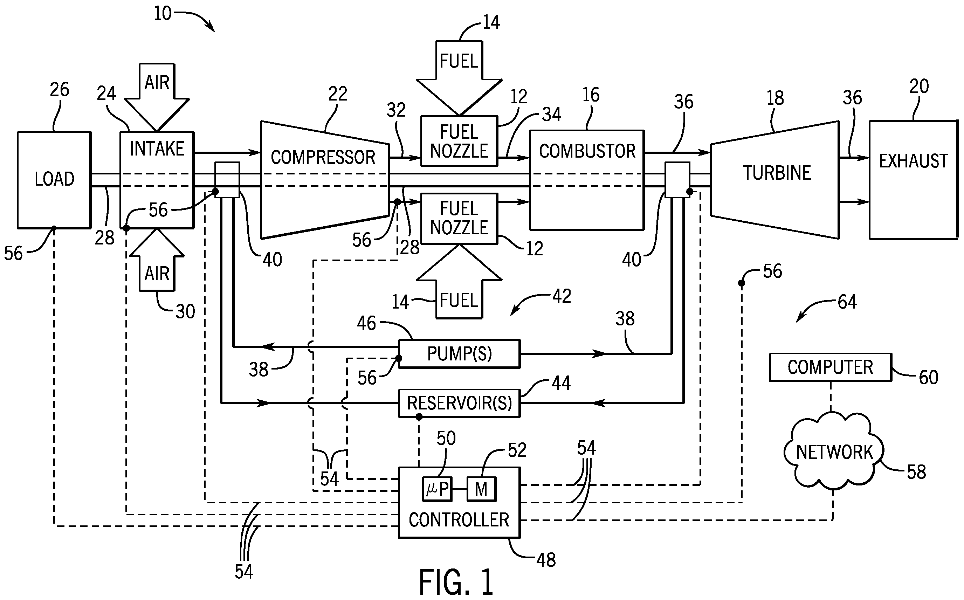

Turning now to the drawings and referring first to FIG. 1, a block diagram of an embodiment of an engine system 10 (e.g., gas turbine system) is illustrated. The diagram includes fuel nozzles 12, fuel 14, and a combustor 16. As depicted, the fuel 14 (e.g., a liquid fuel and/or gas fuel, such as natural gas) is routed to the turbine system 10 through the fuel nozzle 12 into the combustor 16. The combustor 16 ignites and combusts the air-fuel mixture 34, and then passes hot pressurized exhaust gas 36 into a turbine 18. The exhaust gas 36 passes through turbine blades of a turbine rotor in the turbine 18, thereby driving the turbine 18 to rotate. The coupling between blades in the turbine 18 and a shaft 28 will cause the rotation of the shaft 28, which is also coupled to several components (e.g., compressor 22, load 26) throughout the turbine system 10. It may be appreciated that while only one shaft 28 is discussed below, the gas turbine system 10 may have multiple shafts 28 (e.g., coaxial shafts) driven by rotation of the blades of the turbine 18. Eventually, the exhaust gases 36 of the combustion process may exit the turbine system 10 via an exhaust outlet 20.

In an embodiment of the turbine system 10, compressor vanes or blades are included as components of the compressor 22. Blades within the compressor 22 may be coupled to the shaft 28, and will rotate as the shaft 28 is driven to rotate by the turbine 18. The compressor 22 may intake air 30 to the turbine system 10 via an air intake 24. Further, the shaft 28 may be coupled to the load 26, which may be powered via rotation of the shaft 28. As appreciated, the load 26 maybe any suitable device that may generate power via the rotational output of the turbine system 10, such as a power generation plant or an external mechanical load. For example, the load 26 may include an electrical generator, a propeller of an airplane, and so forth. The air intake 24 draws air 30 into the turbine system 10 via a suitable mechanism, such as a cold air intake, for subsequent mixture of the air 30 with the fuel 14 via the fuel nozzles 12. Air 30 taken in by the turbine system 10 may be fed and compressed into pressurized air 32 by rotating blades within the compressor 22. The pressurized air 32 may then be fed into the one or more fuel nozzles 12. The fuel nozzles 12 may then mix the pressurized air 32 and fuel 14, to produce a suitable air-fuel mixture 34 for combustion, e.g., a combustion that causes the fuel 14 to more completely burn, so as not to waste fuel 14 or cause excess emissions in the exhaust gases 36. Again, the turbine 18 is driven by the exhaust gases 36.

One or more bearings 40 of the gas turbine system 10 support the shaft 28. The one or more bearings 40 may provide radial support for the shaft 28, axial support for the shaft 28, or any combination thereof. In some embodiments, one or more of the bearings 40 is a lubricated bearing. A bearing system 42 may supply a lubricant 38 (e.g., oil, grease, gas) from a reservoir 44 to the bearing 40 via one or more pumps 46. The reservoir 44 may include, but is not limited to one or more tanks, one or more sumps, or any combination thereof. In some embodiments, a controller 48 may control the one or more pumps 46 of the bearing system 42. In some embodiments, the controller 48 of the bearing system 42 controls or monitors components of the gas turbine system 10. That is, the controller 48 may be a dedicated controller of the bearing system 42, or a multi-purpose controller of the gas turbine system 10. Additionally, or in the alternative, the controller 48 may be removably coupled to the bearing system 42. For example, the controller 48 may be coupled to the bearing system 42, as shown in FIG. 1, during an inspection or maintenance period when the controller 48 may download logged data from the bearing system 42.

The controller 48 may include one or more processors 50 and a memory 52. The one or more processors 50 may be operatively coupled to the memory 52 to execute instructions for carrying out the presently disclosed techniques. These instructions may be encoded in programs or code stored in a tangible non-transitory computer-readable medium, such as the memory 52 and/or other storage. The processor 50 may be a general purpose processor (e.g., processor of a desktop/laptop computer), system-on-chip (SoC) device, or application-specific integrated circuit, or some other processor configuration. The memory 52, in the embodiment, includes a computer readable medium, such as, without limitation, a hard disk drive, a solid state drive, diskette, flash drive, a compact disc, a digital video disc, random access memory (RAM), and/or any suitable storage device that enables the processor 50 to store, retrieve, and/or execute instructions and/or data. The memory 52 may include one or more local and/or remote storage devices.

The controller 48 is coupled to components of the gas turbine system 10 via a plurality of data lines 54, shown as dashed lines in FIG. 1. Each data line 54 may transmit data signals between the controller 48 and components of the gas turbine system 10. For example, one or more sensors 56 throughout the gas turbine system 10 may communicate sensor data with the controller 48 via one or more respective data lines 54. The sensors 56 may provide feedback to the controller 48 regarding various properties (e.g., operating parameters) of the gas turbine system 10 including, but not limited to, temperature (e.g., lubricant temperature, gas temperature, ambient temperature, exhaust temperature, component operating temperature), pressure (e.g., ambient pressure, fuel pressure, compressor discharge pressure, exhaust pressure, lubricant pressure), composition (e.g., lubricant composition, air intake composition, fuel mixture composition, exhaust gas composition), load on the turbine 18, fluid levels (e.g., fuel 14, lubricant reservoir 44), or any combination thereof. That is, the controller 48 may store (via the memory 52) data corresponding to operation of the gas turbine system 10 for concurrent or later retrieval (e.g., download). Additionally, or in the alternative, the controller 48 may communicate control signals to components (e.g., pump 46, intake 24, compressor 22, fuel nozzle 12) via the one or more respective data lines 54 of the gas turbine system 10.

The controller 48 may be coupled to a network 58 via a wired or wireless connection. In some embodiments, the controller 48 receives instructions or other data to store in the memory 52 from the network 58. Additionally, the controller 48 may transmit data (e.g., control history, sensor feedback) to the network 58. The controller 48 may communicate with the network 58 continuously, at regular or scheduled intervals when the controller 48 is coupled to the network 58, on-demand at the command of an operator of the gas turbine system 10 or the network 58, or any combination thereof. The network 58 may store the data from the controller 48 for later access (e.g., backup, review). In some embodiments, the network 58 may utilize the data from the controller 48 to construct or modify a model of the performance of the gas turbine system 10. Additionally, or in the alternative, the network may utilize the data from the controller 48 with data from controllers 48 of other gas turbine systems 10 to construct or modify such a model. A computer 60 coupled to the network 58 may facilitate communication between the controllers 48 of multiple gas turbine systems 10. Moreover, a computer 60 may transmit data (e.g., instructions, models, thresholds, system updates) to the controllers 48 of multiple gas turbine systems 10, and the computer 60 may receive data from the controllers 48 via the network 58. In some embodiments, the remote computer 60 generates or modifies a model, and distributes the model to a plurality of controllers 48 via the network 58.

As described herein, sensor feedback from the gas turbine system 10 (or other turbomachinery) may be utilized to monitor the condition of the one or more bearings 40. The controller 48, the network 58, one or more computers 60 coupled to the network 58, or any combination thereof, may utilize sensor feedback to monitor the condition of the one or more bearings 40. As discussed herein, a term analytical engine system 64 is understood to refer to the controller 48, the network 58, one or more computers 60, or any combination thereof. It is believed that the temperature of the lubricant 38 and the load (e.g., axial and/or radial) on the bearing 40 during operation may be used to identify the occurrence of a condition (e.g., anomalies, wear) on the bearing 40, thereby enabling the maintenance or replacement of the bearing 40 at a cost-effective time that may reduce downtime of the gas turbine system 10 while preserving the operational integrity of the gas turbine system 10. Operating history and feedback from other sensors 56 may also be used to determine the condition of the bearing 40. The controller 48 may monitor the sensor feedback from the gas turbine system 10 through comparison of the sensor feedback to one or more models stored in memory 52 or on the network 58. Likewise, the network 58, one or more computers 60 coupled to the network 58, or any combination thereof, may monitor the sensor feedback from the gas turbine system 10 through comparison of the sensor feedback to one or more models stored in memory 52 or on the network 58.

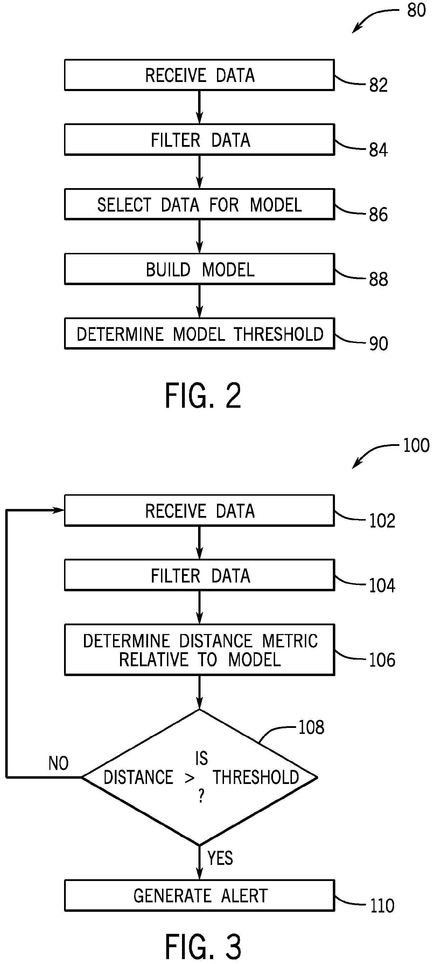

FIG. 2 illustrates a method 80 of the construction (e.g., building, generation) and subsequent modification of a model used to monitor the condition of the one or more bearings 40. To construct or modify the model, the analytical engine system 64 receives (block 82) data. In some embodiments, the method 80 may be executed by a computer (e.g., controller 48) directly coupled to one or more gas turbine systems 10, or to a computer (e.g., network 58, computer 60 coupled to the controller 48 via the network 58) that is remote from and uncoupled to a gas turbine system 10. That is, the computer may receive (block 82) the data for construction or modification of the model directly from a turbomachinery system, or from a data input (e.g., network, memory device, manual input).

The received data may include, but is not limited to, sensor feedback, system identification information, operational history, maintenance history, inspection data, or any combination thereof. For example, the sensor feedback may include one or more of the following: a temperature of the lubricant 38 in the bearing 40, a temperature of the lubricant 38 in the pump 46, a temperature of the lubricant 38 in the reservoir 44, a level of the lubricant 38 in the reservoir 44, a discharge pressure of the compressor 22 (e.g., high pressure compressor), a pressure of the exhaust gas 36, a temperature of the exhaust gas 36, a shaft speed, an ambient environment temperature, an ambient environment pressure, and a humidity of the ambient environment. The system identification information may include, but is not limited to, a model number, a serial number, an installation site for the turbomachinery (e.g., gas turbine system 10), and so forth. The operational history may include, but is not limited to, duration of operation, duration at base loading, duration at peak loading, duration at idle, and startup/shutdown cycles. The maintenance history may include, but is not limited to, date(s) of last service, scheduled maintenance completed, and maintenance technician identity. The inspection data may include, but is not limited to, the condition of the one or more bearings as determined from a previous inspection or maintenance service. It may be appreciated that the analytical engine system 64 (e.g., controller 48, network 58, computer 60) may receive (block 82) data for the model from one or more turbomachines, such as a fleet of gas turbine systems 10 distributed

The analytical engine system 64 (e.g., controller 48, network 58, computer 60) filters (block 84) the received data based on what is determined to be invalid data for modeling. The analytical engine system 64 filters out, or removes from further consideration, received data that does not correspond to a steady state operation of the turbomachine based at least in part on the lubricant temperature. For example, the lubricant temperature may be much lower at a start up of the turbomachinery than during a steady state operation. Additionally, or in the alternative, the lubricant temperature may change based at least in part on a load on the turbomachinery or a rotational speed of the turbomachinery. Accordingly, the analytical engine system 64 may filter (block 84) the received data so that the data used for the construction or modification of the model does not include received data that corresponds to an operation interval where the lubricant temperature is changing. That is, data from steady state operation may better facilitate modeling and comparison than data from dynamic operating periods. In some embodiments, the received data may be removed (e.g., filtered) from further consideration when the lubricant temperature changes more than 1, 2, 3, 4, 5, 10, or more degrees Celsius over an operation interval. In some embodiments, the operation interval is approximately 5, 10, 15, 30, 60, or more minutes.

The analytical engine system 64 (e.g., controller 48, network 58, computer 60) selects (block 86) a subset of the filtered data for the construction or modification of the model. The subset of the filtered data may be selected because it represents normal operation of the turbomachinery within design conditions. Criteria for selection of the subset from the filtered data may include, but is not limited to whether a load is engaged with the turbomachinery, a quantity (e.g., measured quantity, calculated quantity) of the load on the turbomachinery, a compressor discharge pressure, or any combination thereof. For example, the criteria for selection of the subset from the filtered data may be data when the turbomachinery is loaded with a minimum load and the compressor discharge pressure is greater than approximately 3447kPa (500 psi). Additionally, or in the alternative, the compressor discharge pressure may be used alone to select the subset of the filtered data. It is believed that the compressor discharge pressure of the gas turbine system 10 is related to the loading on the one or more bearings 40.

The analytical engine system 64 (e.g., controller 48, network 58, computer 60) generates (block 88) a probability distribution model using the selected subset of the filtered data. The generated probability distribution model may represent a multivariate Gaussian metric, such as a Hotelling's $T^2$ statistic or a Runger $U^2$ statistic. The selected subset of the filtered data used to generate the model may be stored or processed in a matrix (e.g., selected matrix) formed from a plurality of vectors. Each vector of the plurality of vectors may include sensor feedback and/or estimated load data corresponding to a known time or duration. For example, each vector may include one or more lubricant temperatures, one or more gas (e.g., oxygen, exhaust) temperatures, fluid (e.g., fuel, lubricant) pressures, a load on the shaft, a rotational speed, or any combination thereof. The analytical engine system 64 processes the selected matrix to generate (block 88) the probability distribution model with a calculated mean vector and a calculated covariance matrix. It may be appreciated that the probability distribution model may be modified by adding vectors to or removing vectors from the selected matrix, then recalculating the mean vector and covariance matrix of the selected matrix. As discussed in detail below, the mean vector and covariance matrix of the probability distribution model may be used to evaluate sample data vectors to a distance metric to a normal condition of the bearing. It may be appreciated that a small distance corresponds to a relatively high degree of confidence of a normal condition (e.g., lubricant temperature), and a large distance metric corresponds to a relatively low degree of confidence of the normal condition, or an abnormal condition.

The analytical engine system 64 (e.g., controller 48, network 58, computer 60) determines (block 90) model thresholds to differentiate between variations that correspond to normal operation of the turbomachinery and variations that correspond to abnormal operation of the turbomachinery. For example, the analytical engine system 64 may determine a model threshold distance through application of the model to test data sets corresponding to empirically determined abnormal operating conditions, such as conditions immediately preceding a bearing failure or other event Additionally, the analytical engine system 64 may determine a model threshold distance through application of the model to the filtered data from block 84, where the model threshold distance may be based on a determined balance between acceptable false alarm rate (e.g., less than 10, 9, 8, 7, 6, 5, 4, 3, 2, or 1 percent) and minimum coverage (e.g., greater than 80, 85, 90, or 95 percent detection). That is, the analytical engine system 64 may determine a model threshold distance that provides a 7 percent or less false alarm rate and correctly determines an anomaly with a 91 percent detection rate. In some embodiments, the analytical engine system 64 may determine a model threshold distance through application of the model to the filtered data based on only the acceptable false alarm rate. In some embodiments, the model threshold may be based at least in part on a non-parametric histogram of the received data, the filtered data, or the selected data. In some embodiments, the model threshold may vary based at least in part on a load on the turbomachinery, a rotational speed of the turbomachinery, a duration of operation (e.g., continuous operation) of the turbomachinery, or any combination thereof. That is, the model threshold for a low load steady state operating condition may be different than (e.g., greater than) the model threshold for a high-load steady state operating condition.

After construction of the model, as described above and shown by method 80 in FIG. 2, the analytical engine system 64 (e.g., controller 48, network 58, computer 60) executes method 100 to monitor the operation of a turbomachinery system. For example, the analytical engine system 64 may utilize method 100, as shown in FIG. 3, to monitor the condition of one or more lubricated bearings 40 of a turbomachinery system, such as a gas turbine system 10. The analytical engine system 64 (e.g., controller 48, network 58, computer 60) receives (block 102) data from the turbomachinery system. Similar to block 82 described above with method 80, the received data may include, but is not limited to, sensor feedback, system identification information, operational history, maintenance history, inspection data, or any combination thereof. For example, the sensor feedback may include one or more of the following: a temperature of the lubricant 38 in the bearing 40, a temperature of the lubricant 38 in the pump 46, a temperature of the lubricant 38 in the reservoir 44, a level of the lubricant 38 in the reservoir 44, a discharge pressure of the compressor 22 (e.g., high pressure compressor), a pressure of the exhaust gas, a temperature of the exhaust gas, a shaft speed, an ambient environment temperature, an ambient environment pressure, and a humidity of the ambient environment. The analytical engine system 64 may receive the data from the turbomachinery system continuously or at regular intervals. For example, the analytical engine system 64 may receive a data sample approximately every 1, 5, 10, 20, 60, 120, or 240 minutes. Moreover, the received data sample may correspond to one sample time (e.g., one sample vector), or to a set of sample times (e.g., plurality of sample vectors).

The analytical engine system 64 (e.g., controller 48, network 58, computer 60) filters (block 104) the received data based on what is determined to be invalid for comparison with the model. For example, the analytical engine system 64 may filter out, or remove from further consideration, received data that does not correspond to a steady state operation of the turbomachine based at least in part on one or more measurements of the lubricant temperature. The analytical engine system 64 then determines (block 106) a distance metric relative to the model for the remaining received data (e.g., filtered data). As described above, the model may include, but is not limited to, a Hotelling's $T^2$ statistic or a Runger $U^2$ statistic. The Hotelling's $T^2$ metric may be determined using the following Equation 1:

$$T^2 = (X_{new} - \overline{X})^T S_x{}^{-1}(X_{new} - \overline{X}) \hspace{4cm} \text{Equation 1}$$

where $X_{new}$ is a vector of the filtered data, $\overline{X}$ is the mean vector of the multivariate Gaussian model, $S_x$ is the covariance matrix, and $T^2$ is the distance metric. As discussed above, smaller determined values for the distance metric $T^2$ indicate a greater confidence that the data corresponding to the distance metric $T^2$ represents a normal operating behavior.

The Runger metric may be determined using the following Equation 2:

$$U^2 = T^2 - (Z_{new} - \overline{Z})^T S_z{}^{-1}(Z_{new} - \overline{Z}) \hspace{4cm} \text{Equation 2}$$

where $Z_{new}$ is a vector of the filtered data corresponding to a subset of $X_{new}$ values, $\overline{Z}$ is the mean vector of the associated multivariate Gaussian model corresponding to a subset of $\overline{X}$, $S_z$ is the covariance matrix, $T^2$ is Hotelling's $T^2$ metric, and $U^2$ is the distance metric of the Runger $U^2$ statistic. It may be appreciated that the whereas the distance metric $T^2$ of the Hotelling's $T^2$ metric is obtained directly from the multivariate Gaussian probability distribution, the distance metric $U^2$ is conditioned on the values of pre-defined variables that represent operational and ambient conditions before determining the distance metric $U2$. The analytical engine system 64 (e.g., controller 48, network 58, computer 60) may generate (block 88) the model data set with the selected data through a statistical process.

Upon determination of the distance metric (e.g., $U^2$, $T^2$), the analytical engine system 64 (e.g., controller 48, network 58, computer 60) compares (node 108) to the appropriate threshold. It may be appreciated that the appropriate threshold may be based on the load on the turbomachinery, a rotational speed of the turbomachinery, a duration of operation (e.g., continuous operation) of the turbomachinery, or any combination thereof. If the distance metric is less than the appropriate threshold, then the analytical engine system 64 returns to block 102 to receive the next set of data without generating an alert signal. If the distance metric is greater than the appropriate threshold, then the analytical engine system 64 (e.g., controller 48, network 58, computer 60) generates (block 110) an alert signal. The alert signal may be an audible signal, a visual signal, a haptic signal, an electronic signal transmitted to an electronic device (e.g., display, controller, network device), or any combination thereof. In some embodiments, the analytical engine system 64 generates (block 110) the alert signal for an operator to observe. Additionally, or in the alternative, the analytical engine system 64 generates (block 110) the alert signal to be stored in a memory with the filtered data for a later review. For example, the controller 48 may generate an alert signal, which is later observed or communicated with the network 58 and/or a computer 60 when the data from the controller 48 memory 52 is reviewed by the network 58 or computer 60. Furthermore, in some embodiments, the analytical engine system 64 generates (block 110) the alert or generates an elevated alert when a predetermined quantity of distance metrics exceed the appropriate threshold during a predetermined time period. For example, the analytical engine system 64 may generate the alert when three determined distance metrics exceed the appropriate threshold during a four hour period. The predetermined quantity of distance metrics and the predetermined time period may be empirically determined or adjusted to reduce or eliminate false-indications of alerts. In some embodiments, an alert may expire after an elapsed time period in the conditions for the alert are not observed again during the elapsed time.

The method 100 described above may be used to monitor one or more parameters of the gas turbine system 10. For example, the method 100 may be used to monitor the condition of one or more of the bearings 40 through monitoring the lubricant temperature. The monitored lubricant temperature may include at least one of a bearing lubricant temperature in the lubricated bearing 40, a supply lubricant temperature in the pump 46, and a return lubricant temperature in the reservoir 44 (e.g., sump). Therefore, the models and thresholds described above may be used to generate an alert in response to an abnormality of one or more monitored lubricant temperatures.

The load (e.g., thrust) on the bearing 40 may be calculated or measured and compared to a model or an expected value to generate an alert in response to an abnormality of the load. In some embodiments, the load on the bearing 40 maybe calculated based at least in part on one or more pressures in the turbine 18 (e.g., forward cavity, bleed path cavity) of the gas turbine system 10, a load on the blades of the compressor 22 and the blades of the turbine 18, and a strain on a flexible coupling of the gas turbine system 10. It may be appreciated that the forward cavity may be a chamber within the turbine near one of the bearings 40 proximate the turbine, and the bleed path cavity may be a chamber within the turbine near one of the bearings 40 that receives a compressor bleed flow. The load on the bearing 40 may be compared to generate a model via the method 100 described above or another method.

The monitored lubricant temperature may be used together with the monitored load on the bearing 40 to determine the operational condition of the bearing 40. It is believed that monitoring of the load on the bearing 40 independent from, and in addition to monitoring the lubricant temperature, may improve diagnostics of the operational condition of the bearing 40 relative to monitoring only the load on the bearing 40 or only the lubricant temperature. For example, an anomalous load alert may be due to an anomalous condition of the bearing 40, instrumentation issues, or an improper setup/calibration, and an anomalous lubricant temperature alert may be due to an anomalous condition of the bearing, a lubricant temperature sensor issue, or an insufficient model. Analysis of the load alert and the lubricant temperature alert together as described herein may enable improved diagnostics of the bearing 40 and gas turbine system 10.

The analytical engine system 64 (e.g., controller 48, computer 60) may monitor the condition of the bearing 40 and the gas turbine system 10 through assigning alarm codes to various combinations of the load alert and the lubricant temperature alert. The analytical engine system 64 may associate one of the following alarm codes with the operational condition of the gas turbine system 10 during a monitoring period. In some embodiments, the analytical engine system 64 may continuously determine whether the load alert or the bearing alert have been generated. Additionally, or in the alternative, the analytical engine system 64 may periodically determine whether the load alert or the bearing alert have been generated. For example, the analytical engine system 64 may periodically monitor the load alert and the bearing alert at intervals of approximately 5, 10, 15, 30, 45, 60, 120, 240 or more minutes. Furthermore, in some embodiments, an alert or an alarm code may latch, such that an alarm code for a condition other than normal may only be assigned once per latch interval (e.g., 8, 12, 24 hours or more). Table 1 below lists an embodiment of the alarm codes (e.g., 0, 1, 2, 3) that the analytical engine system 64 (e.g., controller 48, network 58, computer 60) may utilize:

**Table 1**

| Load Alert | Lubricant Temperature Alert | Alarm Code | Possible Reason for Alert | Proposed Prescription |
|---|---|---|---|---|
| No | No | 0 | No issue (normal condition). | No prescription. |
| No | Yes | 1 | Temperature sensor calibration; bearing issue without load alert; insufficient model | No immediate action, yet investigate if frequent occurrence |
| Yes | No | 2 | Issue with sensor input for load calculation; improper parameters for load calculation | Investigate non-bearing issue at or before next maintenance period |
| Yes | Yes | 3 | Issue with variable orifice position; thrust balance issue | Investigate immediately; shut down gas turbine system. |

As illustrated above, alarm code 0 corresponds to a normal condition of the gas turbine system 10. That is, neither the calculated load nor the lubricant temperature alerts have been generated. The analytical engine system 64 assigns the alarm code 1 in response to only a lubricant temperature alert without a load alert. Operation of the gas turbine system 10 may continue with the alarm code 1, as the lubricant temperature alert may have been generated for benign reasons that do not necessarily indicate a bearing issue. In particular, the alarm code 1 may correspond to an improperly positioned or calibrated temperature sensor or a normal operating condition for which the presently utilized model is insufficient. An operator may generally continue operation of the gas turbine system 10 with the alarm code 1; however, further investigation into the root cause of the lubricant temperature may be desired if operation with the alarm code 1 is a frequent occurrence (e.g., a majority of monitoring intervals, daily). The recurrence of alarm code 1 may provide sufficient cause for the operator to investigate and resolve the issue to reduce the occurrence of the alarm code 1. Moreover, such an investigation resulting from alarm code 1 may identify a bearing anomaly that may not otherwise be detected from the calculated load.

The analytical engine system 64 assigns the alarm code 2 in response to only a load alert without a lubricant temperature alert. Thus, the alarm code 2 may indicate that the bearing 40 is operating normally with normal conditions, yet an issue with the parameters or inputs for the calculated load may be generating the load alert. Accordingly, an operator may seek to investigate the non-bearing issue at or before next maintenance period to resolve the calculated load issue to reduce the occurrence of the alarm code 2.

The analytical engine system 64 assigns the alarm code 3 in response to both a load alert and a lubricant temperature alert. Thus, the alarm code 3 may indicate that abnormal operating condition of the bearing 40. As may be appreciated, an increased load on the bearing 40 may increase the friction on the bearing 40, thereby increasing the lubricant temperature. Accordingly, the alarm code 3 indicates that both the load and the lubricant temperature exceed predetermined thresholds to generate respective alerts. The alarm code 3 may be caused by an improper orifice setting to supply the lubricant to the bearing 40, wear on the bearing 40, or a leak in a flow through the gas turbine system 10. For at least the reason that the load alert and the lubricant temperature alert are based at least in part on design parameters of the bearing 40 and the gas turbine system 10, the operator may initiate or schedule a shutdown of the gas turbine system 10 in response to the alarm code 3. In some embodiments, the analytical engine system 64 (e.g., controller 48) may initiate the shutdown automatically in response to the alarm code 3; however, the analytical engine system 64 may initiate the shutdown after a notification delay (e.g., 1, 5, 10, 30, or 60 minutes).

It may be appreciated that the information presented above in Table 1 is presented as an example that is not necessarily an exhaustive list of potential alarm codes, possible reasons for alerts, or proposed prescriptions. The analytical engine system 64 (e.g., controller 48, network 58, computer 60) or an operator may utilize additional monitored data and/or operational history in addition to an alarm code to determine a possible reason and proposed prescription for a given alarm code.

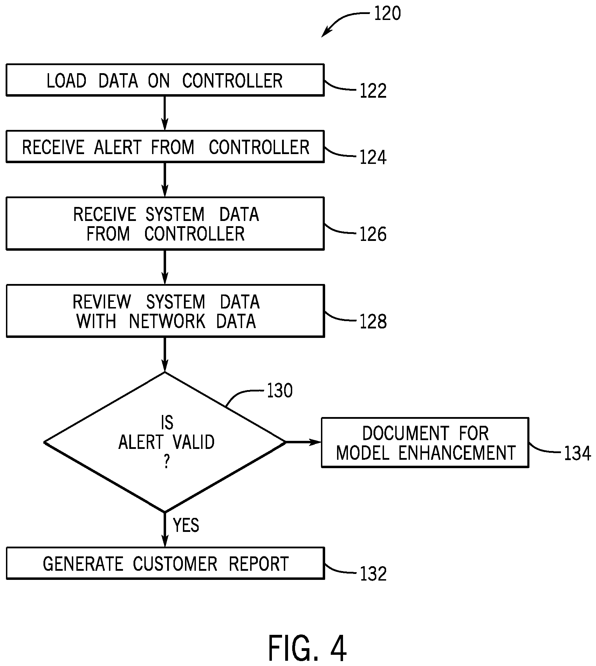

In some embodiments, the computer of the analytical engine system 64 assigning the alarm codes is remote from the gas turbine system 10. For example, a manufacturer may communicate with a plurality of controllers of a fleet of gas turbines via a network 48. FIG. 4 illustrates an embodiment of a method 120 of operating the remote computer and managing alerts. The computer 60 of the analytical engine system 64 may load (block 122) data on the controller 48 of the gas turbine system 10. The loaded data may include, but is not limited to, a model to determine a distance metric for a monitored parameter (e.g., lubricant temperature) or a threshold for the monitored parameter. During operation of the gas turbine system 10, the computer 60 of the analytical engine system 64 may receive (block 124) an alert from the controller 48 of the gas turbine system 10. The received alert may be a load alert, a lubricant temperature alert, an alarm code, or any combination thereof. Additionally, the computer 60 of the analytical engine system 64 may receive (block 126) data from the controller 48 of the analytical engine system 64. The received data may correspond to the data compared with the model and threshold that generated the alert. The received data may include, but is not limited to, sensor feedback, system identification information, operational history, maintenance history, inspection data, or any combination thereof.

Upon receipt of the data, the computer 60 reviews (block 128) the received data from the controller 48. The computer 60 may review the received data by revaluating the received data with the same or a different model as used by the controller 48 of the gas turbine system 10 that generated the alert. Because the computer 60 is coupled via the network 58 of the analytical engine system 64 to a plurality of controllers 48 of a respective plurality of gas turbine systems 10, the computer 60 of the analytical engine system 64 may utilize the received data from multiple gas turbine systems 10 to update (e.g., modify) the one or more models used to generate the alerts. Additionally, or in the alternative, the computer 60 of the analytical engine system 64 may utilize the received data from multiple gas turbine systems 10 to update (e.g., modify) the one or more models used to generate the thresholds. Accordingly, the computer 60 may use an updated model and/or an updated threshold to review (block 128) the received data that generated the alert.

The computer 60 of the analytical engine system 64 validates (node 130) the alert received based at least in part on the result of the review of the received data. That is, where the review by the computer 60 of the received data confirms the alert, the computer 60 generates (block 132) a customer report. As discussed herein, generating the report may include transmitting the customer report to the customer or a responsible agent for the customer. The customer report may include, but is not limited to, an alarm code, a prescribed action by the customer to reduce future costs, a scheduled maintenance period, or any combination thereof. Additionally, or in the alternative, the customer report may be an audible signal, a visual signal, or any combination thereof. Where the review by the computer 60 of the received data does not confirm the alert, the computer 60 documents (block 134) the received data for model and/or threshold enhancement. That is, the computer 60 of the analytical engine system 64 may continually modify the model and/or threshold to better account for new data sets. Modifying the model with the received data may increase the robustness of the respective model for future applications of the model. Moreover, the computer 60 of the analytical engine system 64 may identify trends among the received data from one or more controllers 48 that resulted in an invalidated alert, such that the model may be improved to properly account for the identified trends. In a similar manner, thresholds may be reviewed and modified based at least in part on identified trends from the received data of an invalidated alert.

Technical effects of the invention include the determination of a bearing operating condition using more than a calculated load on the bearing, which may be subject to instrumentation errors. Moreover, the validation of an alert related to the bearing based at least in part on independent measurements (e.g., calculated load, lubricant temperature) may increase the confidence of an alert. Increasing the confidence of an alert and reducing the quantity of false indications may reduce maintenance costs and downtime of a gas turbine system. Furthermore, the capability to modify and update models and thresholds utilized for the lubricant temperature alert enable the capabilities and confidence of the monitoring system to improve over time. Models and thresholds may be implemented on a per system basis or across multiple systems.

This written description uses examples to disclose the invention, and also to enable any person skilled in the art to practice the invention, including making and using any devices or systems and performing any incorporated methods. The patentable scope of the invention is defined by the claims.

**Claims**

1. A monitoring system (42), comprising:
   an analytical engine system (64) coupled to a sensor (56) of an engine system (10), wherein the analytical engine system is configured to:

   receive data (102) corresponding to operation of the engine system, wherein the received data comprises a monitored lubricant temperature of a bearing (40) and operating parameters of the engine system;
   determine a distance metric (106) corresponding to the operating parameters of the engine system, wherein the distance metric is based at least in part on the monitored lubricant temperature relative to a lubricant temperature statistical model, wherein the lubricant temperature statistical model is based at least in part on the operating parameters of the engine system;
   compare (108) the distance metric for the monitored lubricant temperature to a model threshold; and
   generate (110) a lubricant alert signal when the distance metric for the monitored lubricant temperature is greater than the model threshold,
   wherein the analytical engine system (64) is configured to filter (104) the received data based at least in part on whether the received data corresponds to a steady state operation of the engine system, wherein steady state operation of the engine system is based at least in part on the operating parameters of the engine system (10).

2. The monitoring system (42) of claim 1, wherein the lubricant temperature statistical model comprises a Hotelling's $T^2$ statistic or a Runger $U^2$ statistic.

3. The monitoring system (42) of claim 1 or 2, wherein the analytical engine system (64) comprises a memory (52) configured to store the lubricant temperature statistical model and the received data corresponding to operation of the engine system (10).

4. The monitoring system (42) of any preceding claim, wherein the sensor (56) comprises a temperature sensor, and the monitored temperature is based at least in part on sensor feedback from the temperature sensor.

5. The monitoring system (42) of any preceding claim, wherein the monitored temperature comprises a supply lubricant temperature, a return lubricant temperature, or a combination thereof.

6. The monitoring system (42) of any preceding claim, wherein the analytical engine system (64) is configured to determine a calculated load on the bearing based at least in part on pressure feedback from one or more locations of the engine system, wherein the operating parameters comprise the pressure feedback.

7. The monitoring system (42) of claim 6, wherein the analytical engine system (64) is configured to:

   compare (108) the calculated load to a load threshold; and
   generate (110) a load alert signal when the calculated load is greater than the load threshold, wherein the load alert signal is independent from the lubricant alert signal.

8. A non-transitory computer readable medium comprising instructions configured to be executed by a processor (50) of a control system (48), wherein the instructions comprise instructions configured to cause the processor to:

   receive (102) a first set of data corresponding to operation of a first turbomachinery system (10), wherein the first set of received data comprises a monitored lubricant temperature of a first bearing (40) and operating

10

parameters of the first turbomachinery system;

determine (106) a distance metric corresponding to the operating parameters of the engine system, wherein the distance metric is based at least in part on the monitored lubricant temperature relative to a lubricant temperature statistical model, wherein the lubricant temperature statistical model is based at least in part on the operating parameters of the first turbomachinery system;

compare (108) the distance metric for the monitored lubricant temperature to a model threshold; and

generate (110) a lubricant alert signal when the distance metric for the monitored lubricant temperature is greater than the model threshold.

wherein the instructions comprise instructions configured to cause the processor (50) to:

> filter (104) the first set of received data to generate filtered data that corresponds to a steady state operation of the first turbomachinery system (10);
>
> select a subset of the filtered data that corresponds to a normal operation of the first turbomachinery system, wherein the subset is selected based at least in part on a load on the first turbomachinery system, a compressor discharge pressure, or any combination thereof; and
>
> modify the model based at least in part on the subset of the filtered data.

9. The non-transitory computer readable medium of claim 8, wherein the instructions comprise instructions configured to cause the processor (50) to:

> determine (106) a calculated load on the first bearing (40) based at least in part on pressure feedback from one or more locations of the first turbomachinery system, wherein the operating parameters comprise the pressure feedback;
>
> compare (108) the calculated load to a load threshold; and
>
> generate (110) a load alert signal when the calculated load is greater than the load threshold, wherein the load alert signal is independent from the lubricant alert signal.

10. The non-transitory computer readable medium of claim 8, wherein the instructions comprise instructions configured to cause the processor (50) to:

> assign an alarm code to the first set of received (102) data based at least in part whether the processor has generated the lubricant alert signal, and whether the processor has generated the load alert signal.

11. The non-transitory computer readable medium of claim 10, wherein the instructions comprise instructions configured to cause the processor (50) to shut down the first turbomachinery system (10)when the alarm code corresponds to a generated lubricant alert signal and a generated load alert signal.

12. The non-transitory computer readable medium of claim 8, wherein the instructions comprise instructions configured to cause the processor to:

> receive a second set of data corresponding to operation of a second turbomachinery system, wherein the second set of received data comprises a second monitored lubricant temperature of a second bearing and second operating parameters of the second turbomachinery system;
>
> filter the first set of received data and the second set of received data to generate filtered data that corresponds to a steady state operation of the first turbomachinery system and the second turbomachinery system;
>
> select a subset of the filtered data that corresponds to a normal operation of the first turbomachinery system and the second turbomachinery system, wherein the subset is selected from the filtered data of the first set of received data based at least in part on a first load on the first turbomachinery system, a first compressor discharge pressure of the first turbomachinery system, or any combination thereof, and the subset is selected from the filtered data of the second set of received data based at least in part on a second load on the second turbomachinery system, a second compressor discharge pressure of the second turbomachinery system, or any combination thereof; and
>
> modify the model based at least in part on the subset of the filtered data.

13. A method of operating an analytical engine system, comprising:

> receiving data corresponding to operation of a gas turbine system, wherein the received data comprises a monitored lubricant temperature of a bearing and operating parameters of the gas turbine system;

determining a distance metric corresponding to the operating parameters of the gas turbine system, wherein the distance metric is based at least in part on the monitored lubricant temperature relative to a lubricant temperature statistical model, wherein the lubricant temperature statistical model is based at least in part on the operating parameters of the gas turbine system;

comparing the distance metric for the monitored lubricant temperature to a model threshold; and

generating a lubricant alert signal when the distance metric for the monitored lubricant temperature is greater than the model threshold;

filtering the first set of received data to generate filtered data that corresponds to a steady state operation of the first turbomachinery system;

selecting a subset of the filtered data that corresponds to a normal operation of the first turbomachinery system, wherein the subset is selected based at least in part on a load on the first turbomachinery system, a compressor discharge pressure, or any combination thereof; and

modifying the model based at least in part on the subset of the filtered data.

**Patentansprüche**

1. Überwachungssystem (42), umfassend:
   ein analytisches Triebwerksystem (64), das mit einem Sensor (56) eines Triebwerksystems (10) gekoppelt ist, wobei das analytische Triebwerksystem konfiguriert ist zum:

   Empfangen von Daten (102), die dem Betrieb des Triebwerksystems entsprechen, wobei die empfangenen Daten eine überwachte Schmiermitteltemperatur eines Lagers (40) und Betriebsparameter des Triebwerksystems umfassen;

   Bestimmen einer Abstandsmetrik (106), die den Betriebsparametern des Triebwerksystems entspricht, wobei die Abstandsmetrik zumindest teilweise auf der überwachten Schmiermitteltemperatur relativ zu einem statistischen Schmiermitteltemperaturmodell basiert, wobei das statistische Schmiermitteltemperaturmodell zumindest teilweise auf den Betriebsparametern des Triebwerksystems basiert;

   Vergleichen (108) der Abstandsmetrik für die überwachte Schmiermitteltemperatur mit einem Modellschwellenwert; und

   Erzeugen (110) eines Schmiermittelalarmsignals, wenn die Abstandsmetrik für die überwachte Schmiermitteltemperatur größer als der Modellschwellenwert ist,

   wobei das analytische Triebwerkssystem (64) konfiguriert ist, um die empfangenen Daten basierend zumindest teilweise darauf zu filtern (104), ob die empfangenen Daten einem stationären Betriebszustand des Triebwerkssystems entsprechen, wobei der stationäre Betriebszustand des Triebwerkssystems zumindest teilweise auf den Betriebsparametern des Triebwerkssystems (10) basiert.

2. Überwachungssystem (42) nach Anspruch 1, wobei das statistische Schmiermitteltemperaturmodell eine Hotelling-$T^2$-Statistik oder eine Runger-$U^2$-Statistik umfasst.

3. Überwachungssystem (42) nach Anspruch 1 oder 2, wobei das analytische Triebwerksystem (64) einen Speicher (52) umfasst, der konfiguriert ist, um das statistische Schmiermitteltemperaturmodell und die empfangenen Daten, die dem Betrieb des Triebwerksystems (10) entsprechen, zu speichern.

4. Überwachungssystem (42) nach einem der vorstehenden Ansprüche, wobei der Sensor (56) einen Temperatursensor umfasst, und die überwachte Temperatur zumindest teilweise auf einer Sensorrückkopplung von dem Temperatursensor basiert.

5. Überwachungssystem (42) nach einem der vorstehenden Ansprüche, wobei die überwachte Temperatur eine Zufuhrschmiermitteltemperatur, eine Rücklaufschmiermitteltemperatur oder eine Kombination davon umfasst.

6. Überwachungssystem (42) nach einem der vorstehenden Ansprüche, wobei das analytische Triebwerksystem (64) konfiguriert ist, um eine berechnete Last auf dem Lager basierend zumindest teilweise auf einer Druckrückkopplung von einem oder mehreren Stellen des Triebwerksystems zu bestimmen, wobei die Betriebsparameter die Druckrückkopplung umfassen.

7. Überwachungssystem (42) nach Anspruch 6, wobei das analytische Triebwerkssystem (64) konfiguriert ist zum:

Vergleichen (108) der berechneten Last mit einem Lastschwellenwert; und

Erzeugen (110) eines Lastalarmsignals, wenn die berechnete Last größer als der Lastschwellenwert ist, wobei das Lastalarmsignal unabhängig von dem Schmiermittelalarmsignal ist.

8. Nichtflüchtiges computerlesbares Medium, umfassend Anweisungen, die konfiguriert sind, um von einem Prozessor (50) eines Steuersystems (48) ausgeführt zu werden, wobei die Anweisungen Anweisungen umfassen, die konfiguriert sind, um den Prozessor zu veranlassen zum:

Empfangen (102) eines ersten Satzes von Daten, die dem Betrieb eines ersten Turbomaschinensystems (10) entsprechen, wobei der erste Satz von empfangenen Daten eine überwachte Schmiermitteltemperatur eines ersten Lagers (40) und Betriebsparameter des ersten Turbomaschinensystems umfasst;

Bestimmen (106) einer Abstandsmetrik, die den Betriebsparametern des Triebwerksystems entspricht, wobei die Abstandsmetrik zumindest teilweise auf der überwachten Schmiermitteltemperatur relativ zu einem statistischen Schmiermitteltemperaturmodell basiert, wobei das statistische Schmiermitteltemperaturmodell zumindest teilweise auf den Betriebsparametern des ersten Turbomaschinensystems basiert;

Vergleichen (108) der Abstandsmetrik für die überwachte Schmiermitteltemperatur mit einem Modellschwellenwert; und

Erzeugen (110) eines Schmiermittelalarmsignals, wenn die Abstandsmetrik für die überwachte Schmiermitteltemperatur größer als der Modellschwellenwert ist.

wobei die Anweisungen Anweisungen umfassen, die konfiguriert sind, um den Prozessor (50) zu veranlassen zum:

Filtern (104) des ersten Satzes von empfangenen Daten, um gefilterte Daten zu erzeugen, die einem stationären Betriebszustand des ersten Turbomaschinensystems (10) entsprechen;

Auswählen eines Teilsatzes der gefilterten Daten, die einem normalen Betrieb des ersten Turbomaschinensystems entspricht, wobei der Teilsatz basierend zumindest teilweise auf einer Last auf dem ersten Turbomaschinensystem, einem Verdichterentladedruck oder einer beliebigen Kombination davon ausgewählt wird; und

Modifizieren des Modells basierend zumindest teilweise auf dem Teilsatz der gefilterten Daten.

9. Nichtflüchtiges computerlesbares Medium nach Anspruch 8, wobei die Anweisungen Anweisungen umfassen, die konfiguriert sind, um den Prozessor (50) zu veranlassen zum:

Bestimmen (106) einer berechneten Last auf dem ersten Lager (40) basierend zumindest teilweise auf einer Druckrückkopplung von einem oder mehreren Stellen des ersten Turbomaschinensystems, wobei die Betriebsparameter die Druckrückkopplung umfassen;

Vergleichen (108) der berechneten Last mit einem Lastschwellenwert; und

Erzeugen (110) eines Lastalarmsignals, wenn die berechnete Last größer als der Lastschwellenwert ist, wobei das Lastalarmsignal unabhängig von dem Schmiermittelalarmsignal ist.

10. Nichtflüchtiges computerlesbares Medium nach Anspruch 8, wobei die Anweisungen Anweisungen umfassen, die konfiguriert sind, um den Prozessor (50) zu veranlassen zum:
Zuweisen eines Alarmcodes zu dem ersten Satz von empfangenen (102) Daten, basierend zumindest teilweise darauf, ob der Prozessor das Schmiermittelalarmsignal erzeugt hat und ob der Prozessor das Lastalarmsignal erzeugt hat.

11. Nichtflüchtiges computerlesbares Medium nach Anspruch 10, wobei die Anweisungen Anweisungen umfassen, die konfiguriert sind, um den Prozessor (50) zu veranlassen, das erste Turbomaschinensystem (10) abzuschalten, wenn der Alarmcode einem erzeugten Schmiermittelalarmsignal und einem erzeugten Lastalarmsignal entspricht.

12. Nichtflüchtiges computerlesbares Medium nach Anspruch 8, wobei die Anweisungen Anweisungen umfassen, die konfiguriert sind, um den Prozessor zu veranlassen zum:

Empfangen eines zweiten Satzes von Daten, die dem Betrieb eines zweiten Turbomaschinensystems entsprechen, wobei der zweite Satz von empfangenen Daten eine zweite überwachte Schmiermitteltemperatur eines zweiten Lagers und zweite Betriebsparameter des zweiten Turbomaschinensystems umfasst;

Filtern des ersten Satzes von empfangenen Daten und des zweiten Satzes von empfangenen Daten, um gefilterte Daten zu erzeugen, die einem stationären Betriebszustand des ersten Turbomaschinensystems und des zweiten Turbomaschinensystems entsprechen;

Auswählen eines Teilsatzes der gefilterten Daten, die einem normalen Betrieb des ersten Turbomaschinensystems und des zweiten Turbomaschinensystems entspricht, wobei der Teilsatz aus den gefilterten Daten des ersten Satzes empfangener Daten basierend zumindest teilweise auf einer ersten Last auf dem ersten Turbomaschinensystem, einem ersten Verdichterentladedruck des ersten Turbomaschinensystems oder einer beliebigen Kombination davon ausgewählt wird, und der Teilsatz aus den gefilterten Daten des zweiten Satzes empfangener Daten basierend zumindest teilweise auf einer zweiten Last des zweiten Turbomaschinensystems, einem zweiten Verdichterentladedruck des zweiten Turbomaschinensystems oder einer beliebigen Kombination davon ausgewählt wird; und

Modifizieren des Modells basierend zumindest teilweise auf dem Teilsatz der gefilterten Daten.

13. Verfahren zum Betreiben eines analytischen Triebwerkssystems, umfassend:

Empfangen von Daten, die dem Betrieb eines Gasturbinensystems entsprechen, wobei die empfangenen Daten eine überwachte Schmiermitteltemperatur eines Lagers und Betriebsparameter des Gasturbinensystems umfassen;

Bestimmen einer Abstandsmetrik, die den Betriebsparametern des Gasturbinensystems entspricht, wobei die Abstandsmetrik zumindest teilweise auf der überwachten Schmiermitteltemperatur relativ zu einem statistischen Schmiermitteltemperaturmodell basiert, wobei das statistische Schmiermitteltemperaturmodell zumindest teilweise auf den Betriebsparametern des Gasturbinensystems basiert;

Vergleichen der Abstandsmetrik für die überwachte Schmiermitteltemperatur mit einem Modellschwellenwert; und

Erzeugen eines Schmiermittelalarmsignals, wenn die Abstandsmetrik für die überwachte Schmiermitteltemperatur größer als der Modellschwellenwert ist;

Filtern des ersten Satzes von empfangenen Daten, um gefilterte Daten zu erzeugen, die einem stationären Betriebszustand des ersten Turbomaschinensystems entsprechen;

Auswählen eines Teilsatzes der gefilterten Daten, die einem normalen Betrieb des ersten Turbomaschinensystems entsprechen, wobei der Teilsatz basierend zumindest teilweise auf einer Last auf dem ersten Turbomaschinensystem, einem Verdichterentladedruck oder einer beliebigen Kombination davon ausgewählt wird; und

Modifizieren des Modells basierend zumindest teilweise auf dem Teilsatz der gefilterten Daten.

**Revendications**

1. Système de surveillance (42) comprenant :
un système de moteur analytique (64) couplé à un capteur (56) d'un système de moteur (10), dans lequel le système de moteur analytique est configuré pour :

recevoir des données (102) correspondant au fonctionnement du système de moteur, dans lequel les données reçues comprennent une température de lubrifiant surveillée d'un palier (40) et des paramètres de fonctionnement du système de moteur ;

déterminer une mesure de distance (106) correspondant aux paramètres de fonctionnement du système de moteur, dans lequel la mesure de distance est fonction au moins en partie de la température de lubrifiant surveillée par rapport à un modèle statistique de température de lubrifiant, dans lequel le modèle statistique de température de lubrifiant est fonction au moins en partie des paramètres de fonctionnement du système de moteur ;

comparer (108) la mesure de distance pour la température de lubrifiant surveillée à un seuil de modèle ; et

générer (110) un signal d'alerte de lubrifiant lorsque la mesure de distance pour la température de lubrifiant surveillée est supérieure au seuil de modèle,

dans lequel le système de moteur analytique (64) est configuré pour filtrer (104) les données reçues en fonction au moins en partie si les données reçues correspondent à un fonctionnement en régime permanent du système de moteur, dans lequel le fonctionnement en régime permanent du système de moteur est fonction au moins en partie des paramètres de fonctionnement du système de moteur (10).

2. Système de surveillance (42) selon la revendication 1, dans lequel le modèle statistique de température de lubrifiant comprend une statistique $T^2$ de Hotelling ou une statistique $U^2$ de Runger.

3. Système de surveillance (42) selon la revendication 1 ou 2, dans lequel le système de moteur analytique (64) comprend une mémoire (52) configurée pour stocker le modèle statistique de température de lubrifiant et les données reçues correspondant au fonctionnement du système de moteur (10).

4. Système de surveillance (42) selon l'une quelconque revendication précédente, dans lequel le capteur (56) comprend un capteur de température, et la température surveillée est fonction au moins en partie d'une rétroaction de capteur du capteur de température.

5. Système de surveillance (42) selon l'une quelconque revendication précédente, dans lequel la température surveillée comprend une température de lubrifiant d'alimentation, une température de lubrifiant de retour, ou une combinaison de celles-ci.

6. Système de surveillance (42) selon l'une quelconque revendication précédente, dans lequel le système de moteur analytique (64) est configuré pour déterminer une charge calculée sur le palier en fonction au moins en partie de la rétroaction de pression d'une ou plusieurs positions du système de moteur, dans lequel les paramètres de fonctionnement comprennent la rétroaction de pression.

7. Système (42) selon la revendication 6, dans lequel le système de moteur analytique (64) est configuré pour :

comparer (108) la charge calculée à un seuil de charge ; et
générer (110) un signal d'alerte de charge lorsque la charge calculée est supérieure au seuil de charge, dans lequel le signal d'alerte de charge est indépendant du signal d'alerte de lubrifiant.

8. Support lisible par ordinateur non transitoire comprenant des instructions configurées pour être exécutées par un processeur (50) d'un système de commande (48), dans lequel les instructions comprennent des instructions configurées pour amener le processeur à :

recevoir (102) un premier ensemble de données correspondant au fonctionnement d'un premier système de turbomachine (10), dans lequel le premier ensemble de données reçues comprend une température de lubrifiant surveillée d'un premier palier (40) et des paramètres de fonctionnement du premier système de turbomachine ;
déterminer (106) une mesure de distance correspondant aux paramètres de fonctionnement du système de moteur, dans lequel la mesure de distance est fonction au moins en partie de la température de lubrifiant surveillée par rapport à un modèle statistique de température de lubrifiant, dans lequel le modèle statistique de température de lubrifiant est fonction au moins en partie des paramètres de fonctionnement du premier système de turbomachine ;
comparer (108) la mesure de distance pour la température de lubrifiant surveillée à un seuil de modèle ; et
générer (110) un signal d'alerte de lubrifiant lorsque la mesure de distance pour la température de lubrifiant surveillée est supérieure au seuil de modèle.
dans lequel les instructions comprennent des instructions configurées pour amener le processeur (50) à :

filtrer (104) le premier ensemble de données reçues pour générer des données filtrées qui correspondent à un fonctionnement en régime permanent du premier système de turbomachine (10) ;
choisir un sous-ensemble des données filtrées qui correspondent à un fonctionnement normal du premier système de turbomachine, dans lequel le sous-ensemble est choisi en fonction au moins en partie d'une charge sur le premier système de turbomachine, d'une pression de décharge de compresseur, ou d'une quelconque combinaison de celles-ci ; et
modifier le modèle en fonction au moins en partie du sous-ensemble des données filtrées.

9. Support lisible par ordinateur non transitoire selon la revendication 8, dans lequel les instructions comprennent des instructions configurées pour amener le processeur (50) à :

déterminer (106) une charge calculée sur le premier palier (40) en fonction au moins en partie d'une rétroaction de pression d'une ou plusieurs positions du premier système de turbomachine, dans lequel les paramètres de fonctionnement comprennent la rétroaction de pression ;
comparer (108) la charge calculée à un seuil de charge ; et
générer (110) un signal d'alerte de charge lorsque la charge calculée est supérieure au seuil de charge, dans lequel le signal d'alerte de charge est indépendant du signal d'alerte de lubrifiant.

10. Support lisible par ordinateur non transitoire selon la revendication 8, dans lequel les instructions comprennent des instructions configurées pour amener le processeur (50) à :
attribuer un code d'alarme au premier ensemble de données reçues (102) en fonction au moins en partie si le processeur a généré le signal d'alerte de lubrifiant, et si le processeur a généré le signal d'alerte de charge.

11. Support lisible par ordinateur non transitoire selon la revendication 10, dans lequel les instructions comprennent des instructions configurées pour amener le processeur (50) à arrêter le premier système de turbomachine (10) lorsque le code d'alarme correspond à un signal d'alerte de lubrifiant généré et un signal d'alerte de charge généré.

12. Support lisible par ordinateur non transitoire selon la revendication 8, dans lequel les instructions comprennent des instructions configurées pour amener le processeur à :

recevoir un second ensemble de données correspondant au fonctionnement d'un second système de turbomachine, dans lequel le second ensemble de données reçues comprend une seconde température de lubrifiant surveillée d'un second palier et des seconds paramètres de fonctionnement du second système de turbomachine ;
filtrer le premier ensemble de données reçues et le second ensemble de données reçues pour générer des données filtrées qui correspondent à un fonctionnement en régime permanent du premier système de turbomachine et du second système de turbomachine ;
choisir un sous-ensemble des données filtrées qui correspondent à un fonctionnement normal du premier système de turbomachine et du second système de turbomachine, dans lequel le sous-ensemble est choisi parmi les données filtrées du premier ensemble de données reçues en fonction au moins en partie d'une première charge sur le premier système de turbomachine, d'une première pression de décharge de compresseur du premier système de turbomachine, ou d'une quelconque combinaison de celles-ci, et le sous-ensemble est choisi parmi les données filtrées du second ensemble de données reçues en fonction au moins en partie d'une seconde charge sur le second système de turbomachine, d'une seconde pression de décharge de compresseur du second système de turbomachine, ou d'une quelconque combinaison de celles-ci ; et
modifier le modèle en fonction au moins en partie du sous-ensemble des données filtrées.

13. Procédé de fonctionnement d'un système de moteur analytique, comprenant :

recevoir des données correspondant au fonctionnement d'un système de turbine à gaz, dans lequel les données reçues comprennent une température de lubrifiant surveillée d'un palier et des paramètres de fonctionnement du système de turbine à gaz ;
déterminer une mesure de distance correspondant aux paramètres de fonctionnement du système de turbine à gaz, dans lequel la mesure de distance est fonction au moins en partie de la température de lubrifiant surveillée par rapport à un modèle statistique de température de lubrifiant, dans lequel le modèle statistique de température de lubrifiant est fonction au moins en partie des paramètres de fonctionnement du système de turbine à gaz ;
comparer la mesure de distance pour la température de lubrifiant surveillée à un seuil de modèle ; et
générer un signal d'alerte de lubrifiant lorsque la mesure de distance pour la température de lubrifiant surveillée est supérieure au seuil de modèle ;
filtrer le premier ensemble de données reçues pour générer des données filtrées qui correspondent à un actionnement en régime permanent du premier système de turbomachine ;
choisir un sous-ensemble des données filtrées qui correspondent à un fonctionnement normal du premier système de turbomachine, dans lequel le sous-ensemble est choisi en fonction au moins en partie d'une charge sur le premier système de turbomachine, d'une pression de décharge de compresseur, ou d'une quelconque combinaison de celles-ci ; et
modifier le modèle en fonction au moins en partie du sous-ensemble des données filtrées.

FIG. 1

EP 3 312 398 B1

80

```
RECEIVE DATA          — 82
      ↓
FILTER DATA           — 84
      ↓
SELECT DATA FOR MODEL — 86
      ↓
BUILD MODEL           — 88
      ↓
DETERMINE MODEL THRESHOLD — 90
```

# FIG. 2

100

```
RECEIVE DATA          — 102
      ↓
FILTER DATA           — 104
      ↓
DETERMINE DISTANCE METRIC
RELATIVE TO MODEL     — 106
      ↓
```

IS DISTANCE > THRESHOLD ?          — 108

NO

YES

```
GENERATE ALERT        — 110
```

# FIG. 3

120

LOAD DATA ON CONTROLLER — 122

RECEIVE ALERT FROM CONTROLLER — 124

RECEIVE SYSTEM DATA
FROM CONTROLLER — 126

REVIEW SYSTEM DATA
WITH NETWORK DATA — 128

IS
ALERT VALID
? — 130

DOCUMENT FOR
MODEL ENHANCEMENT — 134

YES

GENERATE CUSTOMER REPORT — 132

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S63263209 A
- US 2012185180 A1

- US 2010270798 A1